(19) Europäisches Patentamt / European Patent Office / Office européen des brevets

(11) **EP 3 324 326 B1**

(12) **FASCICULE DE BREVET EUROPEEN**

(45) Date de publication et mention
de la délivrance du brevet:
**23.09.2020 Bulletin 2020/39**

(51) Int Cl.:
**G06F 21/57** *(2013.01)*    **G06F 16/2455** *(2019.01)*

(21) Numéro de dépôt: **17202811.0**

(22) Date de dépôt: **21.11.2017**

(54) **PROCÉDÉ ET SYSTÈME DE DÉTECTION DE VULNÉRABILITÉ D'UN DISPOSITIF EMBARQUÉ**

VERFAHREN UND SYSTEM ZUM AUFDECKEN DER VERLETZLICHKEIT EINER
BORDVORRICHTUNG

METHOD AND SYSTEM FOR DETECTING THE VULNERABILITY OF A VEHICLE-MOUNTED
DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.11.2016 FR 1661298**

(43) Date de publication de la demande:
**23.05.2018 Bulletin 2018/21**

(73) Titulaire: **Commissariat à l'Energie Atomique et
aux Energies
Alternatives
75015 Paris (FR)**

(72) Inventeur: **FONBONNE, Jean-Christophe
38210 Tullins (FR)**

(74) Mandataire: **Brevalex
56, Boulevard de l'Embouchure
B.P. 27519
31075 Toulouse Cedex 2 (FR)**

(56) Documents cités:
**US-A1- 2010 058 475    US-A1- 2012 089 868
US-A1- 2015 339 214    US-B1- 9 432 394**

- **Alexandre Rebert ET AL: "Optimizing Seed
Selection for Fuzzing", Proceedings of the 23rd
USENIX Security Symposium, 20 août 2014
(2014-08-20), XP055368621, Extrait de l'Internet:
URL:https://www.usenix.org/system/files/co
nference/usenixsecurity14/sec14-paper-rebe
rt.pdf [extrait le 2017-05-02]**

**Description**

## DOMAINE TECHNIQUE

La présente invention concerne le domaine de détection de vulnérabilité d'un dispositif comportant un logiciel et plus particulièrement, la détection de vulnérabilité et de failles de sécurité dans un dispositif embarqué.

## ÉTAT DE LA TECHNIQUE ANTÉRIEURE

La détection de vulnérabilité d'un dispositif comportant un logiciel est très importante pour améliorer la sécurité et le comportement du dispositif.

Il existe plusieurs techniques de détection de vulnérabilité et de failles de sécurité de logiciels applicatifs ou de logiciels embarqués. On distingue principalement l'audit de code source, la vérification de modèle par preuve formelle, la vérification statique du code source et la vérification dynamique du code exécuté.

La vérification dynamique du code exécuté comporte une technique dite « test aléatoire » (ou fuzz testing) qui consiste à utiliser un testeur pour injecter de manière intensive des fautes aléatoires, dans le dispositif à évaluer (dit cible d'évaluation). Les fautes aléatoires sont des entrées semi-valides ou volontairement malformées permettant de positionner la cible d'évaluation dans des états inattendus et de provoquer des erreurs exploitables.

Cette technique est largement utilisée du fait qu'elle est simple à mettre en œuvre et donne dans la plupart des cas des bons résultats et ne nécessite pas une connaissance approfondie de la cible.

Toutefois, cette technique de test aléatoire peut prendre beaucoup de temps si une grande quantité de fautes aléatoires sont inutilement injectées par une mauvaise stratégie de génération de ces fautes aléatoires. En outre, la technique de test aléatoire n'assure pas une garantie de complétude quant à la couverture du test. En effet, certaines zones de logiciels peuvent être restées non couvertes si le test est mal adapté ou mal configuré.

Afin de résoudre ce genre de problèmes, on utilise une technique de test aléatoire avec rétroaction (feedback-driven fuzzing) qui propose d'extraire des mesures issues des injections précédentes pour guider de nouvelles injections. Il s'agit plus particulièrement de donner un poids plus important aux injections ayant donné un bon résultat comme graine de mutation des injections suivantes.

Cette technique est bien adaptée lorsque le testeur est exécuté sur le même processeur que la cible et souvent sur le même système d'exploitation. Dans ce cas, il est possible de créer des interfaces et des échanges d'informations entre le testeur, la cible et divers outils de monitorage, même en boîte noire où le ou les outil(s) de tests bénéficie(nt) de la proximité du code binaire. On rappelle qu'un test en boîte noire signifie que l'accès aux informations est partiel. En particulier, les spécifications des systèmes ne sont pas connues et la définition de protocole et d'interface se limite à la vision utilisateur. Le code source n'est pas connu et seul le code binaire de l'image exécuté est accessible et peut être dans certains cas surchargé à des fins de tests. Le système d'exploitation sur lequel est exécutée la cible est ouvert, ce qui permet d'instrumenter des traceurs qui monitorent le comportement de la cible.

Le document US2010058475 révèle un exemple d'un test aléatoire en mode guidé par rétroaction où des segments de code sensibles sont instrumentés dynamiquement après une analyse statique pour fournir une valeur de rétroaction à la fin de chaque exécution. Ce document utilise des techniques évolutionnistes pour chercher parmi les entrées possibles celles qui maximisent la valeur de rétroaction. US9432394 constitue également un document pertinent de l'art antérieur.

Toutefois, la technique de test aléatoire avec rétroaction selon l'art antérieur n'est pas possible en boîte étanche. On rappelle qu'un test en boîte étanche signifie que le système d'exploitation sur lequel est exécutée la cible est fermé. Le code binaire n'est connu que si le format de chargement et d'exécution est accessible par l'extérieur et si ce format n'est pas crypté. L'image n'est pas modifiable pour insérer des ressources de monitorage. En particulier, il n'est pas possible d'instrumenter des traceurs pour monitorer le comportement de la cible.

En effet, les techniques de test aléatoire avec rétroaction selon l'art antérieur partent du principe indispensable que le code binaire exécutable est accessible et qu'il peut être instrumenté et parfois modifié pour aider l'outil de trace même si le test est en boîte noire.

Ainsi, dans un dispositif embarqué de type cyber physique, l'image du programme n'est pas accessible, n'est pas modifiable et on ne peut pas utiliser les résultats d'un traceur. On parle ici de test en boîte étanche où les techniques de l'art antérieur ne sont pas exploitables.

L'objet de la présente invention est de proposer un procédé et un système de détection de vulnérabilité d'un dispositif embarqué remédiant aux inconvénients précités, en particulier en réalisant un test d'évaluation en boîte étanche tout en garantissant une complète couverture de la détection.

**EXPOSÉ DE L'INVENTION**

La présente invention est définie par un système de détection de vulnérabilité d'un dispositif embarqué, dit cible d'évaluation, comportant :

- un générateur de challenge configuré pour générer un message de challenge courant adapté pour tester la vulnérabilité de ladite cible d'évaluation,
- un injecteur de challenge configuré pour injecter ledit message de challenge courant dans ladite cible d'évaluation,
- un module de mesure configuré pour mesurer à travers un canal auxiliaire un signal de fuite relatif à une réaction de la cible d'évaluation à ladite injection du message de challenge courant,
- un analyseur de signaux configuré pour analyser ledit signal de fuite et pour produire un profil courant représentatif dudit message de challenge courant, et
- un calculateur de score configuré pour attribuer un score courant au message de challenge courant en fonction du profil courant et pour envoyer ledit score courant au générateur de challenge qui est adapté pour régénérer un nouveau message de challenge sur la base dudit score courant.

Ainsi, le système récolte depuis la cible et à travers des canaux cachés des mesures physiques représentatives des comportements de la cible en réaction à l'injection du message de challenge. Ceci permet d'estimer la pertinence des stimuli (i.e. des messages de challenge injectés dans la cible) afin de déterminer de nouveaux stimuli plus performants dans l'évaluation de la vulnérabilité de la cible. Ce système de détection permet une couverture complète de la détection même si la cible est de type boite étanche n'offrant aucun accès au code exécutable ou à l'image du programme et ne permettant pas l'utilisation des traceurs.

Avantageusement, le générateur de challenge est adapté pour générer le message de challenge de manière aléatoire à partir d'un descripteur de protocole ou à partir d'un apprentissage préliminaire tout en utilisant une technique de mutation.

Ceci permet de générer de manière simple et robuste des stimuli plus performants à partir des graines de mutation des stimuli précédents ayant eu des bons scores.

Avantageusement, la technique de mutation est basée sur un algorithme génétique ou sur une fonction de distribution non uniforme.

Selon un premier mode de technique de mutation, l'algorithme génétique est configuré pour :

- classer un ensemble de messages de challenge en fonction de leurs scores respectifs,
- combiner deux-à-deux des messages de challenge parmi les messages les mieux classés pour générer des messages de challenge résultants ayant des caractéristiques communes aux deux messages combinés, et
- modifier les messages de challenge résultants pour former des nouveaux messages de challenge ayant des performances optimales.

Selon un premier mode de technique de mutation, la fonction de distribution non uniforme est adaptée pour :

- utiliser une fonction de distribution à moyenne et variance variables représentatives des messages de challenge, et
- pondérer la moyenne et la variance de ladite fonction de distribution en fonction du score pour générer des nouveaux messages de challenge.

Avantageusement, l'injecteur de challenge est adapté pour transformer ledit message de challenge avant son injection en une trame adaptée pour être envoyée sur un canal physique de ladite cible d'évaluation.

Avantageusement, le module de mesure est configuré pour échantillonner le signal de fuite et pour transmettre le signal de fuite échantillonné $S_e$ à l'analyseur de signaux.

Avantageusement, l'analyseur de signaux est configuré pour :

- recevoir le signal de fuite échantillonné $S_e$ depuis le module de mesure,
- filtrer ledit signal de fuite échantillonné $S_e$ formant un signal filtré $S_f$,
- sous-échantillonner ledit signal filtré $S_f$ formant ainsi un signal sous-échantillonné $S_d$,
- synchroniser ledit signal sous-échantillonné $S_d$ formant ainsi un signal synchronisé $S_t$ correspondant au profil courant, et
- construire par une recherche d'équivalence un tableau de comparaison $T_c$ entre le profil courant et des profils de références stockés dans une base de données de profils par exemple à l'aide d'algorithmes probabilistes de type calcul de coefficient de corrélation croisée ou d'algorithmes statistiques de type test d'équivalence de fonction de répartition.

Avantageusement, l'analyseur de signaux est configuré pour stocker le profil courant dans la base de données de profils au cas où ledit profil courant est nouveau. Ceci est réalisé après une analyse probabiliste puis une analyse statistique du profil courant par rapport à tous les profils connus précédents.

Avantageusement, le calculateur de score est configuré pour attribuer un score courant au message de challenge courant en extrayant d'un histogramme d'occurrence une fréquence d'occurrence du profil courant, ce score étant inversement proportionnel au nombre d'occurrence.

Avantageusement, le signal de fuite est un signal sélectionné parmi les signaux suivants : signal électrique de consommation de courant, signal électromagnétique, signal de temps de réponse, et signal de code d'erreur.

Le dispositif embarqué selon la présente invention est un objet connecté comportant un logiciel.

L'invention vise également un procédé de détection de vulnérabilité d'un dispositif embarqué, dit cible d'évaluation, comportant les étapes suivantes :

- générer un message de challenge courant adapté pour tester la vulnérabilité de ladite cible d'évaluation,
- injecter ledit message de challenge courant dans ladite cible d'évaluation,
- mesurer à travers un canal auxiliaire un signal de fuite relatif à une réaction de la cible d'évaluation à ladite injection du message de challenge courant,
- analyser ledit signal de fuite et produire un profil courant représentatif dudit message de challenge courant, et
- attribuer un score courant au message de challenge courant en fonction du profil courant et envoyer ledit score courant au générateur de challenge qui est adapté pour régénérer un nouveau message de challenge sur la base dudit score courant.

## BRÈVE DESCRIPTION DES DESSINS

La Fig. 1 illustre de manière schématique un système de détection de vulnérabilité d'un dispositif embarqué, selon un mode de réalisation de l'invention ;
La Fig. 2 illustre de manière schématique un procédé et système de détection de vulnérabilité d'une cible d'évaluation, selon un mode de réalisation préféré de l'invention ; et
La Fig. 3 illustre de manière schématique la mesure d'un signal de fuite de consommation de courant, selon un mode de réalisation de l'invention.

## EXPOSÉ DÉTAILLÉ DE MODES DE RÉALISATION PARTICULIERS

Le principe de l'invention est d'utiliser une technique de test aléatoire pour évaluer la vulnérabilité d'une cible pouvant être de type boite étanche et d'accéder à la cible par des canaux physiques cachés pour estimer une rétroaction utile au test aléatoire.

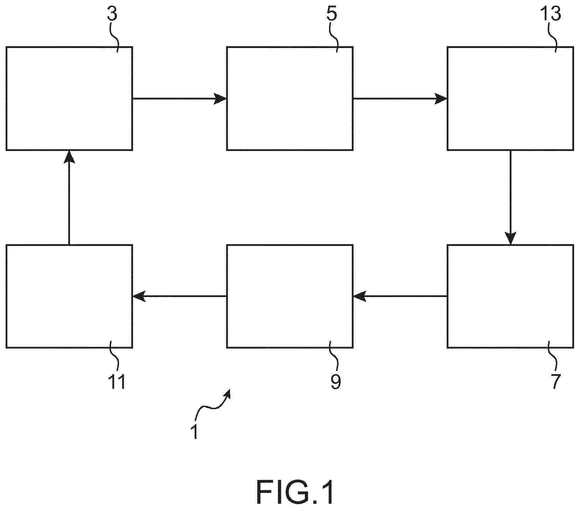

La Fig. 1 illustre de manière schématique un système de détection de vulnérabilité d'un dispositif embarqué, selon un mode de réalisation de l'invention.

Par dispositif embarqué, on entend un dispositif comportant un logiciel autonome à ressources limitées comme par exemple un capteur connecté ou objet connecté de type montre connectée. On notera que le dispositif embarqué peut ne pas comporter de système d'exploitation et peut comporter seulement très peu de branches. Dans la suite, le dispositif embarqué sous test est appelé cible d'évaluation.

Le système 1 de détection est une structure assemblant une chaîne de modules comportant un générateur 3 de challenge, un injecteur 5 de challenge, un module de mesure 7, un analyseur 9 de signaux et un calculateur 11 de score. Les différents modules forment avec la cible 13 d'évaluation une boucle complète formée d'une chaine d'injection de challenges et d'une chaine de rétroaction.

Le générateur 3 de challenge est un module algorithmique configuré pour générer des stimuli dits messages de challenge adaptés pour tester la vulnérabilité de la cible 13 d'évaluation.

Plus particulièrement, le générateur 3 de challenge est adapté pour générer de manière aléatoire des messages de challenge quasiment valides ou malformés soit à partir d'un descripteur de protocole soit à partir d'un apprentissage lancé dans une phase préliminaire. Le générateur 3 de challenge met en œuvre des mutateurs et distributions aléatoires indiqués, de manière générale, par un manifeste de test aléatoire (fuzzing).

L'injecteur 5 de challenge (ou moteur de fuzzing) joue le rôle d'un pont entre le générateur 3 de challenge et la cible 13 d'évaluation. Il est ainsi configuré pour injecter dans la cible 13 d'évaluation les messages de challenge générés par le générateur 3 de challenge. En particulier, l'injecteur 5 de challenge transforme chaque message de challenge avant son injection en une trame adaptée pour être envoyée sur un canal physique filaire ou non filaire de la cible 13 d'évaluation.

En recevant un message de challenge, la cible 13 réagit en fonction de sa robustesse et de la nature du message de challenge. Ainsi, en analysant le comportement de la cible 13 d'évaluation, on peut déterminer la pertinence du message de challenge.

En effet, le module de mesure 7 est configuré pour mesurer à travers un canal caché ou auxiliaire des signaux de fuite relatifs aux réactions de la cible 13 d'évaluation aux injections des messages de challenge. A titre d'exemple, les signaux de fuites peuvent être des signaux électriques de consommation de courant, des signaux électromagnétiques, des signaux temporels de réponse ou des signaux de codes d'erreur.

L'analyseur 9 de signaux est configuré pour analyser les signaux de fuite mesurés par le module de mesure 7. Cette analyse permet de produire pour chaque signal de fuite un profil représentatif du message de challenge correspondant et de reconnaître chaque nouveau profil.

Le calculateur 11 de score est configuré pour attribuer des scores aux messages de challenge en fonction des profils correspondants et pour envoyer ces scores au générateur 3 de challenge. Ce dernier est adapté pour régénérer des nouveaux messages de challenge sur la base des scores reçus depuis le calculateur 11.

On notera que les opérations réalisées par le système 1 de détection sont mises en œuvre par un système de traitement de type ordinateur.

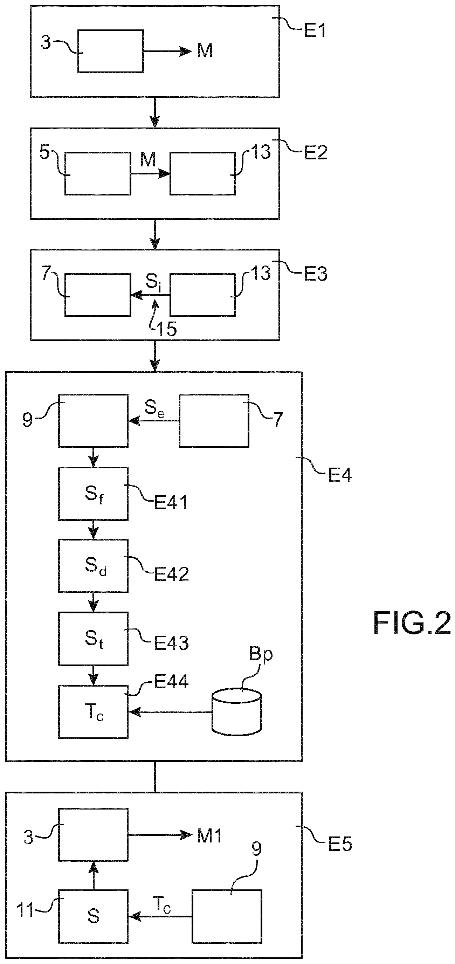

La Fig. 2 illustre de manière schématique un procédé et système de détection de vulnérabilité d'une cible d'évaluation, selon un mode de réalisation préféré de l'invention.

A l'étape E1, le générateur de challenge génère de manière aléatoire un message de challenge M courant pour tester la vulnérabilité de la cible 13 d'évaluation. Selon un premier exemple, le message de challenge M courant est généré de manière connue à partir d'un descripteur de protocole. Selon un deuxième exemple, le message de challenge M courant est généré à partir d'un apprentissage par l'expérience lancé dans une phase préliminaire. En outre, le générateur 3 de challenge utilise avantageusement une technique de mutation pour engendrer le message M de challenge. Cette technique de mutation peut être basée sur un algorithme génétique ou sur une fonction de distribution non-uniforme.

L'algorithme génétique est un procédé itératif comportant en général quatre phases sur un groupe de N individus (i.e. N messages de challenge) pour une population ou génération. Après un certain nombre d'itérations la population converge vers la meilleure performance de recherche d'erreurs.

La première phase est un cycle d'évaluation dans lequel le générateur 3 de challenge génère des messages de challenges et où l'injecteur 5 de challenge injecte à tour de rôle ces messages de challenges dans la cible 13 d'évaluation. La réponse de la cible 13 est détectée par le module de mesure 7 et analysée par l'analyseur 9 de signaux avant que le calculateur lui attribue un score. Un bon score signifie que la réponse est intéressante pour détecter une erreur, en revanche un mauvais score signifie que la réponse n'a aucun intérêt.

La deuxième phase est une phase de sélection dans laquelle le générateur 3 de challenge classe les messages d'alertes (i.e. les individus) en fonction de leurs scores respectifs. On leur donne une probabilité d'être sélectionné dans la génération suivante en fonction de leur score et de la probabilité de sélectionner le meilleur individu.

La troisième phase est une étape de combinaison où des messages de challenge sélectionnés sont combinés deux-à-deux pour générer des messages de challenge résultants ayant des caractéristiques communes aux messages combinés. Deux messages de challenge initiaux qui se croisent donnent naissance à deux nouveaux individus ayant des caractéristiques communes aux deux parents (i.e. messages initiaux).

La quatrième phase est une phase de mutation où les messages de challenge résultants sont modifiés pour former des nouveaux messages de challenge ayant potentiellement des performances améliorées ou optimales. La modification consiste par exemple à changer de manière aléatoire un pourcentage extrêmement faible (de l'ordre de 0,1% à 1%) du nombre de bits dans la chaine du message.

En variante, la technique de mutation par fonction de distribution non-uniforme utilise une fonction (par exemple la distribution de Von-Mises) à moyenne et variance variable représentative des messages de challenge. La moyenne et la variance de la fonction de distribution sont pondérées en fonction du score pour générer des nouveaux messages de challenge. Plus le score est élevé, plus la moyenne est centrée sur les messages de challenge gagnants et la variance est faible. En revanche, plus le score est faible, plus la variance est forte et la moyenne se rapproche de la valeur centrale. Ainsi, lorsqu'un tirage aléatoire d'un message de challenge ne donne pas de bon score, on va élargir le champ de la distribution. En revanche, lorsque le tirage donne un bon score, on resserre la distribution autour de la valeur gagnante.

A l'étape E2, l'injecteur 5 de challenge reste connecté à la cible 13 d'évaluation et a pour rôle d'envoyer à ce dernier les messages de challenge. En effet, l'injecteur 13 de challenge transforme le message de challenge M courant fourni par le générateur 3 de challenge en une trame adaptée pour être envoyée sur le canal physique (par exemple, USB, Bluetooth, wifi, CAN, etc.) de la cible 13.

En recevant le message de challenge M courant, la cible 13 réagit en fonction de la valeur de cette entrée. De manière générale, il peut y avoir trois principaux cas de figure.

Dans le premier cas, le message de challenge M est vraiment erroné et la cible 13 détecte et gère cette erreur convenablement. Dans ce cas, le challenge est rejeté car la cible 13 réagit peu.

Dans le deuxième cas, le message de challenge M est valide et ne provoque pas d'erreur. Dans ce cas, la cible 13 peut avoir une réaction importante mais prédictible et répétitive.

Dans le troisième cas, le message de challenge M est erroné mais provoque une erreur sur la cible 13 qui n'avait pas envisagé ce cas de malformation. Dans ce cas, la cible 13 va avoir une réaction anormale, spécifique et détectable.

A l'étape E3, le module de mesure 7 effectue une mesure à travers un canal auxiliaire 15 d'un signal de fuite $S_i$ relatif à la réaction de la cible 13 d'évaluation. Le signal de fuite $S_i$ peut par exemple être un signal de consommation de courant ou un signal de rayonnement électromagnétique.

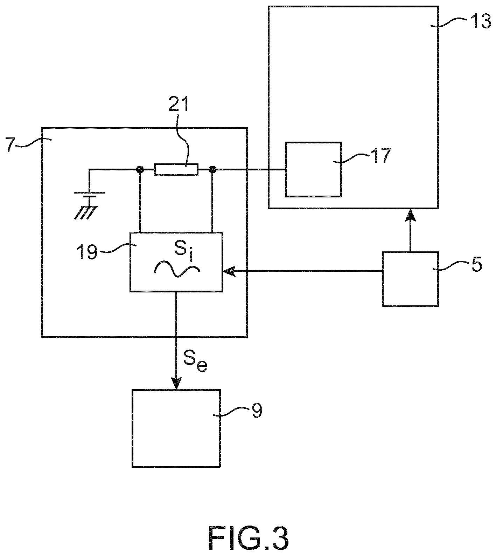

La Fig. 3 illustre de manière schématique la mesure d'un signal de fuite de consommation de courant, selon un mode de réalisation de l'invention.

Avantageusement, le module de mesure 7 réalise la mesure à l'intérieur de l'équipement embarqué (la cible) 13 ou sinon à l'entrée du circuit d'alimentation 17 de l'équipement 13. Selon cet exemple, le module de mesure 7 comporte un oscilloscope 19 numérique et une résistance 21 de très faible valeur (par exemple autour de 10 Ohm). La résistance 21 est mise en série avec le circuit d'alimentation 17 de la cible 13 et la tension aux bornes de cette résistance 21 est mesurée par l'oscilloscope 19 aux moyens de deux sondes Va et Vb. Avantageusement, l'oscilloscope 19 présente une bonne performance (par exemple, 200Mhz de bande passante et 1 giga échantillons par seconde) afin d'extraire le plus d'informations possibles qui seront surtout fonction de la fréquence du processeur de la cible 13 d'évaluation.

L'oscilloscope 19 est configuré pour recevoir depuis l'injecteur 5 de challenge un signal logique (0 ou 1) déclencheur de l'échantillonnage de la tension Vb-Va.

L'oscilloscope 19 démarre l'échantillonnage lorsque l'injecteur 5 a fini d'envoyer la trame de challenge à la cible 13, c'est-à-dire à l'instant où la cible 13 d'évaluation commence à la traiter. Si la cible 13 d'évaluation fournit systématiquement une réponse (cible verbeuse), on termine l'acquisition de mesures lorsque la cible 13 termine l'émission de sa réponse. Si la cible 13 retourne rarement de réponse (cible peu verbeuse) on peut envisager deux solutions.

La première solution consiste à faire une hypothèse sur un temps maximum de réaction de la cible 13 et d'arrêter l'acquisition de mesures lorsque ce temps est dépassé. Si l'hypothèse est bonne, toutes les réponses seront plus courtes en durée que le temps maximum mais le système 1 va fonctionner correctement. En revanche, si l'hypothèse du temps maximum est fausse, l'oscilloscope 19 va manquer de l'information car l'acquisition du signal de fuite $S_i$ est arrêtée trop tôt et le système 1 de détection peut ne pas fonctionner. Dans ce cas, on augmente le temps maximum et on recommence l'acquisition des mesures.

La deuxième solution consiste à faire signaler à l'analyseur 9 de signaux la fin de chaque réponse.

Au final et quel que soit l'option choisie, le module de mesure 7 est configuré pour échantillonner le signal de fuite $S_i$ et pour transmettre le signal de fuite échantillonné $S_e$ à l'analyseur 9 de signaux. On notera qu'au cas où le signal de fuite $S_i$ n'est pas exploitable à cause d'un bruit trop fort, on peut moyenner plusieurs réponses identiques (par exemple une dizaine à quelques dizaine de réponses) pour atténuer le bruit.

Par ailleurs, à l'étape E4, l'analyseur 9 de signaux reçoit le signal de fuite échantillonné $S_e$ depuis le module de mesure 5 et analyse ce signal.

Plus particulièrement, à l'étape E41, l'analyseur 9 de signaux filtre le signal de fuite échantillonné $S_e$. En effet, la première opération de l'analyse consiste à filtrer les hautes fréquences au-dessus de la fréquence du processeur car l'information de fuite recherchée ne peut pas être dans les gammes hautes de fréquence. Ainsi, on forme un signal filtré $S_f$ selon l'expression suivante :

$$S_f = \text{lowpass\_filter}(F_p, S_e)$$

où $F_p$ représente la fréquence du processeur.

A l'étape E42, l'analyseur 9 de signaux sous-échantillonne le signal filtré $S_f$ pour ne pas avoir à manipuler trop d'échantillons en traitant le signal filtré Sf par un filtre interpolateur à une fréquence normalisée $F_n$. Ainsi, un signal sous-échantillonné $S_d$ est formé selon l'expression suivante :

$$S_d = \text{interpolation\_filter}(F_n, S_f)$$

A l'étape E43, l'analyseur 9 de signaux synchronise le signal sous-échantillonné $S_d$ en supprimant (par troncature) des séquences de référence Sb et Se aux bornes du signal sous-échantillonné $S_d$. Ainsi, un signal synchronisé $S_t$ correspondant au profil courant est formé selon l'expression suivante :

$$St = Sd[Nb,Ne = ]troncate(Sd,Sb,Se)$$

où Nb et Ne sont les rangs du début et de la fin.

A l'étape E44, l'analyseur de signaux construit par une recherche d'équivalence (avec un maximum de probabilité) un tableau de comparaison $T_c$ entre le profil courant St et des profils de références Pn stockés dans une base de données de profils Bp.

Il existe plusieurs techniques connues pour la recherche d'équivalence dans une base de données comme par exemple la technique d'analyse en composantes principales, la technique d'apprentissage profond (deep-learning) ou beaucoup d'autres. La technique choisie va dépendre de la nature de la cible 13 et de la complexité du logiciel embarqué.

Un premier exemple concerne le cas d'une cible 13 ayant un logiciel simple qui ne comporte pas de système d'exploitation OS, qui est de type mono-fil d'exécution (monothread) et qui comporte très peu de branches. Dans ce cas, l'analyseur 9 de signaux peut être configuré pour utiliser une simple comparaison par un calcul de minimisation.

Ainsi, pour chaque profil Pn dans la base de données de profils Bp, l'analyseur 9 de signaux calcule une distance Pd entre le profil courant St et les profils de référence Pn de la manière suivante :

$$Pd[n] = sum_i( (Pn[i] - St[i])\text{\textasciicircum}2)/L,$$

L étant la longueur des tableaux d'échantillons (i.e. le nombre d'échantillons).

Ensuite, l'analyseur 9 de signaux stocke les valeurs Pd[n] dans un tableau de comparaison $T_c$ qui sera ensuite envoyé au calculateur 11 de score.

Un deuxième exemple concerne le cas d'une cible 13 ayant un logiciel moyennement complexe ne comportant pas de système d'exploitation OS, qui est de type mono-tâche mais qui peut comporter des branches multiples et intriquées (nested), et qui présente une bonne synchronisation. Dans ce cas, l'analyseur 9 de signaux peut être configuré pour utiliser une technique de calcul de coefficients de corrélation entre le profil courant $S_t$ et les profils de référence Pn contenus dans la base de données de profils Bp. Les coefficients de corrélation peuvent être calculés selon un corrélateur de type Pearson Cp, de la manière suivante :

$$Cp[n] = pearson\_correlator(Pn, St)$$

L'analyseur 9 de signaux stocke ensuite les valeurs Cp[n] dans un tableau de comparaison $T_c$ qui sera ultérieurement envoyé au calculateur de score.

Un troisième exemple concerne le cas d'une cible ayant un logiciel complexe comportant un système d'exploitation OS avancé de type linux, de type multi taches et comportant des branches multiples. Dans ce cas, l'analyseur 9 de signaux peut être configuré pour construire une matrice de corrélation croisée Cc (cross-correlation) et pour déterminer la probabilité d'équivalence en calculant la moyenne des coefficients selon l'expression suivante :

$$Cc[n,k] = cross\_correlation(k,Pn,St)$$

L'analyseur 9 de signaux calcule ensuite la variance de ces suites de corrélation croisée pour déterminer une probabilité de répétition d'équivalence (nombre de pique de corrélation) selon l'expression suivante :

$$VAR[n] = variance_k(Cc[n,k])$$

Si le calcul de variance ne suffit pas à discriminer le profil courant par rapport aux profils stockés, on peut avoir recours à une estimation d'équivalence de fonction de répartition (par exemple test de Kolmogorov-Smirnov) entre le profil courant et les profils connus ayant obtenus les meilleures corrélations.

Ensuite, l'analyseur 9 de signaux stocke les valeurs VAR[n] dans un tableau de comparaison $T_c$. Chaque valeur est référencée par un index de profil.

Ainsi, le tableau des comparaisons Tc peut comporter soit les valeurs Pd[n], soit les valeurs Cp[n], soit les valeurs VAR[n] selon le choix de la technique de détection d'équivalence utilisée.

Avantageusement, l'analyseur 9 de signaux est en outre configuré pour stocker le profil courant $S_t$ dans la

base de données de profils $B_p$ au cas où le profil courant est nouveau. Ceci permet d'enrichir la base de données de profils.

A l'étape E5, le calculateur 11 de score reçoit l'index du profil reconnu dans le tableau de comparaison depuis l'analyseur 9 de signaux et attribue un score S courant au message de challenge M courant. Le calculateur 11 est configuré pour entretenir un histogramme d'occurrence comportant le nombre de détections (fourni par l'analyseur) pour chacun des profils connus. Le score S est attribué en extrayant de l'histogramme d'occurrence la fréquence d'occurrence du profil courant $S_t$ (i.e. le nombre de fois où le profil courant a été reconnu dans la base de données de profil $B_p$). La valeur du score S est alors inversement proportionnel au nombre d'occurrences.

Pour cela, le calculateur 11 de score peut par exemple utiliser une technique de probabilité cumulative en disposant de l'occurrence maximum de comparaison Cmax jamais enregistré et cumulé au cours du temps. Ainsi, pour chaque coordonnée du tableau de comparaison Tc, le calculateur de score calcule le score S[n] selon l'expression suivante :

$$S[n] = (Tc[n]\text{-}min(Tc))/(Cmax - min(Tc)) \text{ si } Tc[n] < Cmax$$

$$S[n] = 1 \text{ sinon (meilleur score dépassé).}$$

Ensuite, le calculateur 11 de score envoie le score S courant au générateur 3 de challenge qui est adapté pour régénérer un nouveau message de challenge M1 sur la base du score courant selon l'étape E1.

**Revendications**

1. Système de détection de vulnérabilité d'un dispositif embarqué, dit cible d'évaluation, **caractérisé en ce qu'**il comporte :

   - un générateur (3) de challenge configuré pour générer un message de challenge courant adapté pour tester la vulnérabilité de ladite cible (13) d'évaluation,
   - un injecteur (5) de challenge configuré pour injecter ledit message de challenge courant dans ladite cible (13) d'évaluation,
   - un module de mesure (7) configuré pour mesurer à travers un canal auxiliaire un signal de fuite relatif à une réaction de la cible (13) d'évaluation à ladite injection du message de challenge courant,
   - un analyseur (7) de signaux configuré pour analyser ledit signal de fuite et pour produire un profil courant représentatif dudit message de challenge courant, et
   - un calculateur (11) de score configuré pour attribuer un score courant au message de challenge courant en fonction du profil courant et pour envoyer ledit score courant au générateur (3) de challenge qui est adapté pour régénérer un nouveau message de challenge sur la base dudit score courant.

2. Système selon la revendication 1, **caractérisé en ce que** le générateur (3) de challenge est adapté pour générer le message de challenge de manière aléatoire à partir d'un descripteur de protocole ou à partir d'un apprentissage préliminaire tout en utilisant une technique de mutation.

3. Système selon la revendication 2, **caractérisé en ce que** la technique de mutation est basée sur un algorithme génétique ou sur une fonction de distribution non uniforme.

4. Système selon la revendication 3, **caractérisé en ce que** l'algorithme génétique est configuré pour :

   - classer un ensemble de messages de challenge en fonction de leurs scores respectifs,
   - combiner deux-à-deux des messages de challenge parmi les messages les mieux classés pour générer des messages de challenge résultants ayant des caractéristiques communes aux deux messages combinés, et
   - modifier les messages de challenge résultants pour former des nouveaux messages de challenge ayant des performances optimales.

5. Système selon la revendication 3, **caractérisé en ce que** la fonction de distribution non uniforme est adaptée pour :

   - utiliser une fonction de distribution à moyenne et variance variables représentatives des messages de challenge, et
- pondérer la moyenne et la variance de ladite fonction de distribution en fonction du score pour générer des nouveaux messages de challenge.

6. Système selon l'une quelconque des revendications précédentes, **caractérisé en ce que** l'injecteur (5) de challenge est adapté pour transformer ledit message de challenge avant son injection en une trame adaptée pour être envoyée sur un canal physique de ladite cible d'évaluation.

7. Système selon l'une quelconque des revendications précédentes, **caractérisé en ce que** le module de mesure (7) est configuré pour échantillonner le signal de fuite et pour transmettre le signal de fuite échantillonné ($S_e$) à l'analyseur (9) de signaux.

8. Système selon la revendication 7, **caractérisé en ce que** l'analyseur (9) de signaux est configuré pour :

   - recevoir le signal de fuite échantillonné ($S_e$) depuis le module de mesure,
   - filtrer ledit signal de fuite échantillonné ($S_e$) formant un signal filtré ($S_f$),
   - sous-échantillonner ledit signal filtré ($S_f$) formant ainsi un signal sous-échantillonné ($S_d$),
   - synchroniser ledit signal sous-échantillonné ($S_d$) formant ainsi un signal synchronisé $S_t$ correspondant au profil courant, et
   - construire par une recherche d'équivalence un tableau de comparaison ($T_c$) entre le profil courant et des profils de références stockés dans une base de données de profils.

9. Système selon la revendication 7, **caractérisé en ce que** l'analyseur (9) de signaux est configuré pour stocker le profil courant dans la base de données de profils au cas où ledit profil courant est nouveau.

10. Système selon la revendication 9, **caractérisé en ce que** le calculateur (11) de score est configuré pour attribuer un score courant au message de challenge courant en extrayant d'un histogramme d'occurrence une fréquence d'occurrence du profil courant.

11. Système selon l'une quelconque des revendications précédentes, **caractérisé en ce que** le signal de fuite est un signal sélectionné parmi les signaux suivants : signal électrique de consommation de courant, signal électromagnétique, signal de temps de réponse, et signal de code d'erreur.

12. Système selon l'une quelconque des revendications précédentes, **caractérisé en ce que** le dispositif embarqué (13) est un objet connecté comportant un logiciel.

13. Procédé de détection de vulnérabilité d'un dispositif embarqué, dit cible d'évaluation, **caractérisé en ce qu'**il comporte les étapes suivantes :

   - générer un message de challenge courant adapté pour tester la vulnérabilité de ladite cible (13) d'évaluation,
   - injecter ledit message de challenge courant dans ladite cible d'évaluation,
   - mesurer à travers un canal auxiliaire un signal de fuite relatif à une réaction de la cible d'évaluation à ladite injection du message de challenge courant,
   - analyser ledit signal de fuite et produire un profil courant représentatif dudit message de challenge courant, et
   - attribuer un score courant au message de challenge courant en fonction du profil courant et envoyer ledit score courant au générateur de challenge qui est adapté pour régénérer un nouveau message de challenge sur la base dudit score courant.

**Patentansprüche**

1. System zur Erkennung der Anfälligkeit einer Bordvorrichtung, Bewertungsziel genannt, **dadurch gekennzeichnet, dass** es enthält:

   - einen Challenge-Generator (3), der dazu ausgelegt ist, eine aktuelle Challenge-Meldung zu erzeugen, die dazu geeignet ist, die Anfälligkeit des Bewertungsziels (13) zu testen,
   - einen Challenge-Einkoppler (5), der dazu ausgelegt ist, die aktuelle Challenge-Meldung in das Bewertungsziel (13) einzukoppeln,

- ein Messmodul (7), das dazu ausgelegt ist, über einen Hilfskanal ein Lecksignal zu messen, das sich auf eine Reaktion des Bewertungsziels (13) auf die Einkopplung der aktuellen Challenge-Meldung bezieht,
- einen Signalanalysator (7), der dazu ausgelegt ist, das Lecksignal zu analysieren und ein aktuelles Profil zu erzeugen, das repräsentativ für die aktuelle Challenge-Meldung ist, und
- einen Punkterechner (11), der dazu ausgelegt ist, der aktuellen Challenge-Meldung gemäß dem aktuellen Profil eine aktuelle Punktzahl zuzuweisen und diese aktuelle Punktzahl an den Challenge-Generator (3) zu senden, der dazu geeignet ist, eine neue Challenge-Meldung auf der Grundlage der aktuellen Punktzahl neu zu generieren.

2. System nach Anspruch 1, **dadurch gekennzeichnet, dass** der Challenge-Generator (3) dazu geeignet ist, die Challenge-Meldung zufällig aus einem Protokolldeskriptor oder aus einem vorbereitenden Training unter Verwendung einer Mutationstechnik zu generieren.

3. System nach Anspruch 2, **dadurch gekennzeichnet, dass** die Mutationstechnik auf einem genetischen Algorithmus oder auf einer ungleichmäßigen Verteilungsfunktion beruht.

4. System nach Anspruch 3, **dadurch gekennzeichnet, dass** der genetische Algorithmus dazu ausgelegt ist:

- eine Reihe von Challenge-Meldungen entsprechend ihrer jeweiligen Punktzahlen zu klassifizieren,
- Challenge-Meldungen aus den ranghöchsten Challenge-Meldungen paarweise zu kombinieren, um daraus resultierende Challenge-Meldungen zu generieren, die gemeinsame Merkmale der beiden kombinierten Meldungen aufweisen, und
- die resultierenden Challenge-Meldungen zu modifizieren, um neue Challenge-Meldungen mit optimaler Leistung zu bilden.

5. System nach Anspruch 3, **dadurch gekennzeichnet, dass** die ungleichmäßige Verteilungsfunktion dazu geeignet ist:

- eine Verteilungsfunktion mit variablem Mittelwert und variabler Varianz zu verwenden, die repräsentativ für die Challenge-Meldungen sind, und
- den Mittelwert und die Varianz der Verteilungsfunktion entsprechend der Punktzahl zu gewichten, um neue Challenge-Meldungen zu generieren.

6. System nach einem der vorangehenden Ansprüche, **dadurch gekennzeichnet, dass** der Challenge-Einkoppler (5) dazu geeignet ist, die Challenge-Meldung vor ihrer Einkopplung in einen Frame umzuwandeln, der dazu geeignet ist, über einen physikalischen Kanal des Bewertungsziels gesendet zu werden.

7. System nach einem der vorangehenden Ansprüche, **dadurch gekennzeichnet, dass** das Messmodul (7) dazu ausgelegt ist, das Lecksignal abzutasten und das abgetastete Lecksignal ($S_e$) an den Signalanalysator (9) zu übertragen.

8. System nach Anspruch 7, **dadurch gekennzeichnet, dass** der Signalanalysator (9) dazu ausgelegt ist:

- das abgetastete Lecksignal ($S_e$) vom Messmodul zu empfangen,
- das abgetastete Lecksignal ($S_e$) zu filtern, wodurch ein gefiltertes Signal ($S_f$) gebildet wird,
- das gefilterte Signal ($S_f$) subabzutasten, wodurch ein subabgetastetes Signal ($S_d$) gebildet wird,
- das subabgetastete Signal ($S_d$) zu synchronisieren, wodurch ein synchronisiertes Signal $S_t$ gebildet wird, das dem aktuellen Profil entspricht, und
- eine Vergleichstabelle ($T_c$) zwischen dem aktuellen Profil und Referenzprofilen, die in einer Profildatenbank abgespeichert sind, mit Hilfe einer Äquivalenzsuche zu erstellen.

9. System nach Anspruch 7, **dadurch gekennzeichnet, dass** der Signalanalysator (9) dazu ausgelegt ist, das aktuelle Profil in der Profildatenbank abzuspeichern, falls das aktuelle Profil neu ist.

10. System nach Anspruch 9, **dadurch gekennzeichnet, dass** der Punkterechner (11) dazu ausgelegt ist, der aktuellen Challenge-Meldung einen aktuellen Punktwert zuzuweisen, indem er eine Häufigkeit des Auftretens des aktuellen Profils aus einem Histogramm des Auftretens extrahiert.

**11.** System nach einem der vorangehenden Ansprüche, **dadurch gekennzeichnet, dass** das Lecksignal ein Signal ist, das aus den folgenden Signalen ausgewählt ist: einem elektrischen Stromverbrauchssignal, einem elektromagnetischen Signal, einem Antwortzeitsignal und einem Fehlercodesignal.

**12.** System nach einem der vorangehenden Ansprüche, **dadurch gekennzeichnet, dass** die Bordvorrichtung (13) ein angeschlossenes Objekt mit einer Software ist.

**13.** Verfahren zur Erkennung der Anfälligkeit einer Bordvorrichtung, Bewertungsziel genannt, **dadurch gekennzeichnet, dass** es die folgenden Schritte umfasst:

- Generieren einer aktuellen Challenge-Meldung, die geeignet ist, die Anfälligkeit des Bewertungsziels zu testen (13),
- Einkoppeln der aktuellen Challenge-Meldung in das Bewertungsziel,
- Messen eines Lecksignals durch einen Hilfskanal, das sich auf eine Reaktion des Bewertungsziels auf die Einkopplung der aktuellen Challenge-Meldung bezieht,
- Analysieren des Lecksignals und Erzeugen eines aktuellen Profils, das repräsentativ für die aktuelle Challenge-Meldung ist, und
- Zuweisen einer aktuellen Punktzahl zur aktuellen Challenge-Meldung auf der Grundlage des aktuellen Profils und Senden der aktuellen Punktzahl an den Challenge-Generator, der dazu geeignet ist, eine neue Challenge-Meldung auf der Grundlage der aktuellen Punktzahl neu zu generieren.

**Claims**

**1.** A system for detecting the vulnerability of a vehicle-mounted device, called a target of evaluation, **characterised in that** it includes:

- a challenge generator (3) configured to generate a current challenge message adapted to test vulnerability of said target of evaluation (13),
- a challenge injector (5) configured to inject said current challenge message into said target of evaluation (13),
- a measurement module (7) configured to measure through an auxiliary channel a leak signal relating to a response of the target of evaluation (13) to said injection of the current challenge message,
- a signal analyser (7) configured to analyse said leak signal and to produce a current profile representative of said current challenge message, and
- a score calculator (11) configured to assign a current score to the current challenge message as a function of the current profile and send said current score to the challenge generator (3) which is adapted to regenerate a new challenge message based on said current score.

**2.** The system according to claim 1, **characterised in that** the challenge generator (3) is adapted to randomly generate the challenge message from a protocol descriptor or from a preliminary learning while using a mutation technique.

**3.** The system according to claim 2, **characterised in that** the mutation technique is based on a genetic algorithm or a non-uniform distribution function.

**4.** The system according to claim 3, **characterised in that** the genetic algorithm is configured to:

- classify a set of challenge messages as a function of their respective scores,
- combine challenge messages two by two among the best classified messages to generate resulting challenge messages having characteristics common to both combined messages, and
- modify the resulting challenge messages to form new challenge messages having optimum performance.

**5.** The system according to claim 3, **characterised in that** the non-uniform distribution function is adapted to:

- use a distribution function with a variable average and variance representative of the challenge messages, and
- weight the average and variance of said distribution function as a function of the score to generate new challenge messages.

**6.** The system according to any of the previous claims, **characterised in that** the challenge injector (5) is adapted to transform said challenge message before it is injected into a frame adapted to be sent over a physical channel of said target of evaluation.

7. The system according to any of the previous claims, **characterised in that** the measurement module (7) is configured to sample the leak signal and to transmit the sampled leak signal ($S_e$) to the signal analyser (9).

8. The system according to claim 7, **characterised in that** the signal analyser (9) is configured to:

- receive the sampled leak signal ($S_e$) from the measurement module,
- filter said sampled leak signal ($S_e$) forming a filtered signal ($S_f$),
- sub-sample said filtered signal ($S_f$) thus forming a sub-sampled signal ($S_d$),
- synchronise said sub-sampled signal ($S_d$) thus forming a synchronised signal $S_t$ corresponding to the current profile, and
- construct by equivalence searching a comparison table ($T_c$) between the current profile and reference profiles stored into a profile database.

9. The system according to claim 7, **characterised in that** the signal analyser (9) is configured to store the current profile into the profile database in the case where said current profile is new.

10. The system according to claim 9, **characterised in that** the score calculator (11) is configured to assign a current score to the current challenge message by extracting a frequency of occurrence of the current profile from an occurrence histogram.

11. The system according to any of the previous claims, **characterised in that** the leak signal is a signal selected from the following signals: current consumption electric signal, electromagnetic signal, response time signal, and error code signal.

12. The system according to any of the previous claims, **characterised in that** the vehicle-mounted device (13) is a connected object including software.

13. A method for detecting vulnerability of a vehicle-mounted device, called a target of evaluation, **characterised in that** it includes the following steps of:

- generating a current challenge message adapted to test vulnerability of said target of evaluation (13),
- injecting said current challenge message into said target of evaluation,
- measuring through an auxiliary channel a leak signal relating to a response of said target of evaluation to said injection of the current challenge message,
- analysing said leak signal and producing a current profile representative of said current challenge message, and
- assigning a current score to the current challenge message as a function of the current profile and sending said current score to the challenge generator which is adapted to regenerate a new challenge message based on said current score.

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010058475 A
- US 9432394 B